# EUROPEAN PATENT APPLICATION

(11) **EP 3 540 226 A1**
(43) Date of publication of application: **18.09.2019**
(21) Application number: 17868938.6
(22) Date of filing: 18.10.2017
(51) Int. Cl.: F04C 2/344, F04C 15/00

(54) **VANE PUMP**

(30) Priority: 10.11.2016 JP 2016219546
(71) Applicant: Nippon Oil Pump Co., Ltd., Kumagaya-shi, Saitama 360-0831 (JP); Kanzaki Kokyukoki Mfg. Co., Ltd., Hyogo 661-0981 (JP)
(72) Inventor: TAKANI Kunimitsu, Kumagaya-shi Saitama 360-0831 (JP); SAKIKAWA Shigenori, Amagasaki Hyogo 661-0981 (JP); YAMAOKA Yoshimune, Amagasaki Hyogo 661-0981 (JP); IMA Akihiro, Amagasaki Hyogo 661-0981 (JP)
(74) Representative: Dehns
(86) International application number: PCT/JP2017/037677
(87) International publication number: WO 2018/088148

(57) **Abstract**

The purpose of the present invention is to provide a vane pump that is able to prevent decrease of power transmission efficiency when the vane pump is used in combination with a device such as a transmission device, for example. Therefore, this vane pump (10, 20, 50, 60, 70, 80, 90) has a hollow shaft (1, 21, 51, 61, 71, 81, 91), the hollow shaft (1, 21, 51, 61, 71, 81, 91) is configured such that a hollow portion thereof allows a rotation driving shaft (which is, for example, an input shaft 103 of a transmission device as illustrated in figure 1, and, which also includes an input shaft which is inserted directly into the transmission device from a driving source 102 without having a coupling interposed therebetween) of the driving source (102) to be inserted therethrough, and the hollow shaft (1, 21, 51, 61, 71, 81, 91) and the rotation driving shaft (103) are coupled by means of a mechanism (spline, key and key groove, etc.) for transmitting a torque but transmitting no thrust.

## Description

### [Technical Field]

The present invention relates to a vane pump.

### [Background Art]

Various types of a vane pump, which includes a cam ring with an internal space having a non-circular sectional shape and a rotor having a circular sectional shape and a vane (blade) moving freely in a radial groove being machined into a rotor, have been proposed (see Patent Literature 1, for example).

Such vane pump is applied in a manner that a vane pump is mounted on a transmission device, in some cases.

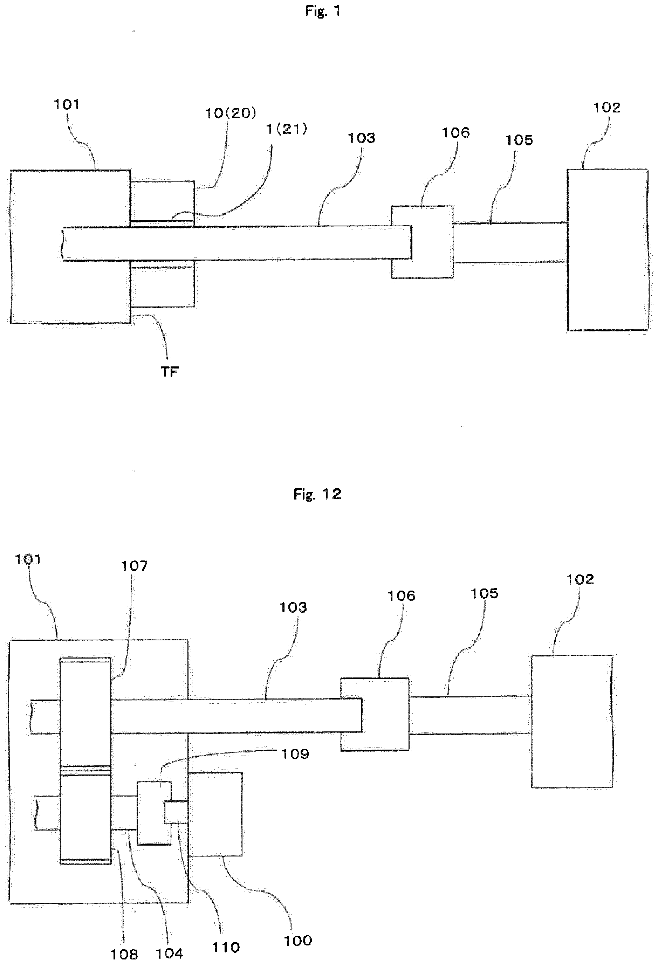

In the prior art, as shown in Fig. 12, in a case that the vane pump 100 (or a gear pump) in the prior art is used so as to be mounted on the transmission device 101, a second shaft 104 for driving the vane pump 100 (or the gear pump) is provided in the transmission device 101, in addition to an input shaft 103 to which power is transmitted from a driving source 102 (such as an engine, for example) . And the shaft 103 and the second shaft 104 are offset.

In Fig. 12, an output shaft 105 of the driving source 102 is coupled with the input shaft 103 of the transmission device 101 by a first coupling 106. Inside the transmission device 101, a gear 107 is coupled with the input shaft 103, the gear 107 is engaged with a gear 108, and the gear 108 is coupled with the second shaft 104. And the second shaft 104 supplies power to the vane pump 100 by a second coupling 109.

The gears 107, 108 construct a gear mechanism in which the second shaft 104 offset the input shaft 103.

However, in constructions shown in Fig. 12, there are mechanical losses in each of a spot in which the shaft 103 is coupled with the gear 107, a engaged portion between the gear 107 and the gear 108, a coupled spot between the gear 108 and the second shaft 104, a spot in which the second shaft 104 is coupled with the vane pump 100 and the like, and there is a problem that efficiency in a portion, in which the transmitted power to the shaft 103 is further transmitted to the vane pump 100, is lowered.

Moreover, it is necessary to carry out a step for matching the second shaft 104 with a rotation center axis of the vane pump 100, that is, a so-called "centering" step.

### [Citation List]

### [Patent Literature]

[Patent Literature 1]
Non-examined Japanese Patent Application Publication No. 2012-163040

### [Summary of Invention]

### [Technical Problem to be solved]

The present invention was proposed in view of the above-mentioned problem of the prior art and an object of present invention is to provide a vane pump which can prevent lowering of power transmission efficiency when the vane pump is used in combination with a transmission device, for example.

### [Construction of Invention]

A vane pump (10, 20, 50, 60, 70, 80, 90) of the present invention is characterized in that:
the pump comprises a hollow shaft (1, 21, 51, 61, 71, 81, 91),
the hollow shaft (1, 21, 51, 61, 71, 81, 91) is constructed such that a rotation driving shaft (the input shaft 103 of the transmission device 101 as shown in Fig. 1, for example: including an input shaft to which an input is directly transmitted so that the driving force is transmitted to the transmission device from the driving source 102 without through a coupling) of a driving source (102) can be inserted into a hollow portion, and that
the hollow shaft (1, 21, 51, 61, 71, 81, 91) and the rotation driving shaft (103) are coupled (connected or engaged) by a mechanism for transmitting a torque but transmitting no thrust.

In the present invention, a rotor (2, 22) is preferably mounted on the hollow shaft (1, 21, 51, 61, 71, 81, 91).

Here, it is preferable that the hollow shaft (1, 21, 51, 61, 71, 81, 91) and the rotor (2, 22) are mounted in a manner that relative rotation is not possible and movement in an axial direction is limited by a wire ring (3, 23), and that
the wire ring (3, 23) is disposed across a shaft-side recess portion (1A) and a rotor-side stepped portion (2A) in a state that the shaft-side recess portion (1A) formed on the hollow shaft (1, 21, 51, 61, 71, 81, 91) and the rotor-side stepped portion (2A) formed on the rotor (2, 22) are aligned.

In this case, the rotor-side stepped portion (2A) is formed on both side surfaces of the rotor (2, 22), and a depth dimension (d1) of the rotor-side stepped portion (2A) is preferably larger than a diameter (D1) of a wire material of the wire ring (3, 23).

Moreover, in the present invention, it is preferable that mechanical seal (4A, 4B, 24A, 24B) is provided on both end portions in the axial direction of the hollow shaft (1, 21), and a circuit (5, 25: relief circuit for protection) for communicating the mechanical seals (4A, 4B, 24A, 24B) on the both end portions each other.

In carrying out of the present invention, the rotor (2) and a cam ring (6) may be provided one respectively or may be provided in plural (two each, for example).

In the present invention, the mechanism for transmitting a torque but transmitting no thrust may be a female spline and a male spline formed on an inner peripheral surface of the hollow shaft (1, 21, 51, 81, 91) and an outer peripheral surface of the rotation driving shaft (103), or may be a key (52) and a keyway (53).

Moreover, the mechanism for transmitting a torque but transmitting no thrust preferably may be constructed by an engagement groove (61B) penetrating the hollow shaft (61), a through hole of the rotation driving shaft (103) and a spring pin (62) being capable of insertion into the engagement groove (61B) and the through hole.

Alternatively, it is possible to form a plurality of accommodating portions (71B) at an equal interval in a circumferential direction of the hollow shaft (71), a spherical member (72: engagement ball) and a radial direction pressing member (73: pressing bolt) for pressing the spherical member (72) inwardly in the radial direction are accommodated in the accommodating portion (71B), and a plurality of the spherical members (72: engagement ball) is pressed inwardly in the radial direction so that the hollow shaft (71) and the rotation driving shaft (103) can be coupled.

In the present invention, it is preferable that the mechanism for transmitting a torque but transmitting no thrust is constructed by splines formed on the outer peripheral surface of the rotation driving shaft (103) and the inner peripheral surface of the hollow shaft (81), the splines are formed only in regions (regions immediately below the vane) in the vicinity of the vane in the axial direction of the rotation driving shaft (103) and the hollow shaft (81), a region where the splines are not provided in the rotation driving shaft (103) and the hollow shaft (81) constructs a lubricant-oil filling space (large diameter portion) in which a lubricant oil (grease oil, for example) is filled, and a sealing member (82: a square ring, for example) for the lubricant oil is provided in a region on a side separated from a cover portion (7).

Alternatively, it is preferable that the mechanism for transmitting a torque but transmitting no thrust is constructed by splines formed on the whole region in the axial direction of the outer peripheral surface of the rotation driving shaft (103) and the inner peripheral surface of the hollow shaft (91), a sealing member (92: a spline seal) for the lubricant oil is disposed in a region on a side separated from the cover portion (7), the sealing member (92) has projections and recesses formed on an outer periphery thereof, and that the projections and recesses are formed so as to correspond to the spline (female spline) formed on the inner peripheral surface of the hollow shaft (91).

Moreover, in the present invention, the hollow shaft (51, 61, 71, 81, 91) is preferably supported by a supporting member disposed on a side being separated from the cover portion (7) and a supporting member disposed in the vicinity of the cover portion (7).

In this case, instead of the circuit (5, 25: relief circuit for protection) communicating the mechanical seal (4A, 4B, 24A, 24B) on the both end portions in the axial direction of the hollow shaft (1, 21) each other, it is preferably to provide a circuit (55) communicating the mechanical seal (4B, 24B) on the cover portion (7, 27) side with an intake portion (intake port 14).

### [Advantageous Effect of Invention]

According to the vane pump (10, 20, 50, 60, 70, 80, 90) of the present invention comprising the above-mentioned constructions, the vane pump (10, 20, 50, 60, 70, 80, 90) includes the hollow shaft (1, 21, 51, 61, 71, 81, 91), by inserting the rotation driving shaft (the input shaft 103 of the transmission device 101, for example) of the driving source (102) into the hollow portion of the hollow shaft (1, 21, 51, 61, 71, 81, 91), and by coupling the hollow shaft (1, 21, 51, 61, 71, 81, 91) and the rotation driving shaft (103) by the mechanism (splines, key and keyway and the like) for transmitting a torque but transmitting no thrust, the vane pump (10, 20, 50, 60, 70, 80, 90) is rotated/driven by the rotation driving shaft (105) of the driving source (102) without interposing a coupling separately.

As a result, when the vane pump (10, 20, 50, 60, 70, 80, 90) is used in a manner that the vane pump is attached to another device (the transmission device 101, for example), for example, since the vane pump (10, 20, 50, 60, 70, 80, 90) is directly rotated/driven by the input shaft (103) of the transmission device (101), for example, it is not necessary to provide a gear mechanism (the gear mechanisms 107, 108 inside the transmission device 101 shown in Fig. 12) for transmitting rotation driving force or a shaft (the second shaft 104, for example: see Fig. 12) for rotating/driving the vane pump separately, and it is not necessary to provide a coupling mechanism between the vane pump (10, 20, 50, 60, 70, 80, 90) and the driving shaft. Thus, there is not various transmission losses in coupling (the second coupling 109 in Fig. 12), an engaged portion between the input shaft and the gear, engaged portions between the gears and the like, transmission efficiency of the rotation driving force input into the vane pump (10, 20, 50, 60, 70, 80, 90) of the present invention is improved, and the transmission device (101) can be made smaller.

Moreover, since it is not necessary to separately provide the shaft (the second shaft 104: see Fig. 12) for rotating/driving vane pump, a bearing for supporting/bearing the shaft for rotating/driving vane pump is not necessary, the gear mechanism for transmitting rotation driving force is not necessary either, the number of constructional components of a device on which the vane pump (10, 20, 50, 60, 70, 80, 90) of the present invention is mounted is largely reduced, and then component management becomes extremely easy.

And then, since it is only necessary that the power transmission shaft (the input shaft 103 of the transmission device 101, for example) is inserted into the hollow portion of the hollow shaft (1, 21, 51, 61, 71, 81, 91) of the vane pump (10, 20, 50, 60, 70, 80, 90), a labor and/or cost for assembling is remarkably reduced.

Moreover, according to the present invention, since the rotation driving shaft (a solid shaft: the input shaft 103 of the transmission device 101 shown in Fig. 1, for example) of the driving source (102) is inserted into the hollow portion of the inner side in the radial direction of the hollow shaft (1, 21, 51, 61, 71, 81, 91), even if a force (a force in a thrust direction) in the rotation shaft direction operates on the rotation driving shaft (103, input shaft), the rotation driving shaft (103) merely slides on the hollow portion of the hollow shaft (1, 21, 51, 61, 71, 81, 91), and the hollow shaft (1, 21, 51, 61, 71, 81, 91) does not load (receive) the force in the axial direction. Thus, in the present invention, a fastening force operating when the vane pump is attached to the driving source does not transmit to the driving source (102) through the hollow shaft (1, 21, 51, 61, 71, 81, 91).

Here, in a case that the driving source (102) is an internal combustion engine, it is necessary to provide a bearing (a bearing bush, for example) for supporting the hollow shaft (1, 21, 51, 61, 71, 81, 91) in the radial direction. However, in a case that the driving source (102) is an electric motor, it is possible to delete (omit) such a bearing (a bearing bush, for example) for supporting the hollow shaft (1, 21, 51, 61, 71, 81, 91) in the radial direction.

In the present invention, by mounting the rotor (2, 22) on the hollow shaft (1, 21, 51, 61, 71, 81, 91), it is possible to prevent a situation such that the hollow shaft (1, 21, 51, 61, 71, 81, 91) is removed from the vane pump (10, 20, 50, 60, 70, 80, 90).

Here, since the rotation driving shaft (solid shaft: the input shaft 103 of the transmission device 101 shown in Fig. 1, for example) of the driving source (102) is inserted into the hollow portion on the inner side in the radial direction of the hollow shaft (1, 21, 51, 61, 71, 81, 91), even if the force (a force in the thrust direction) operates in the rotation shaft direction on the rotation driving shaft (103), the rotation driving shaft (103) merely slides on the hollow portion of the hollow shaft (1, 21, 51, 61, 71, 81, 91), and the hollow shaft (1, 21, 51, 61, 71, 81, 91) does not load the force in the axial direction. Thus, even if the rotor (2, 22) is mounted on the hollow shaft (1, 21, 51, 61, 71, 81, 91), the force in the axial direction of the rotation driving shaft (103) of the driving source (102) is not transmitted to the rotor (2, 22) .

Then, by mounting the hollow shaft (1, 21, 51, 61, 71, 81, 91) and the rotor (2, 22) so that the relative rotation is impossible and that the movement in the axial direction is limited by the wire ring (3, 23), and by disposing (positioning) the wire ring (3, 23) in the mode that the wire ring across the shaft-side recess portion (1A) and the rotor-side stepped portion (2A) in a state in which the shaft-side recess portion (1A) formed on the hollow shaft (1, 21, 51, 61, 71, 81, 91) and the rotor-side stepped portion (2A) formed on the rotor (2, 22) are aligned, a gap is generated in a mounting portion of the hollow shaft (1, 21, 51, 61, 71, 81, 91) and the rotor (2, 22), and even if the hollow shaft (1, 21, 51, 61, 71, 81, 91) is moved in the axial direction, the rotor (2, 22) is not moved for the gap portion, and the rotor (2, 22) is prevented to collide against to the cover portion (7, 27), a pressure plate (18, 38) or an intermediate plate (40).

Here, the rotor-side stepped portion (2A) is formed on both side surfaces of the rotor (2, 22), and if the depth dimension (d1) of the rotor-side stepped portion (2A) is larger than the diameter (D1) of the wire rod of the wire ring (3, 23), the wire ring (3, 23) can be accommodated inside the rotor (2, 22), the rotor (2, 22) is prevented to interfere with the wire ring (3, 23), and design of pump construction on the both side surfaces of the rotor (2, 22) become easy.

In the present invention, in some cases, the mechanical seal (4A, 4B, 24A, 24B) are disposed on both end portions in the axial direction of the vane pump (10, 20).

However, in the prior-art vane pump, the mechanical seal is provided only on one side (an end portion being close to an equipment supplying power, for example) in the axial direction, but the mechanical seal is not provided on the other (the end portion being separated from the equipment supplying power, for example). Then, a relief circuit for relieving a pressure operating on the mechanical seal is also provided only on the end portion on a side to which the mechanical seal is provided, while the relief circuit is not formed on the other (the end portion being separated from the equipment supplying power, for example), and thus, in a case that the constructions of the prior-art vane pump is applied to the present invention, it is possible that the mechanical seal provided on the other is broken.

On the other hand, in the present invention, by providing a circuit (5, 25: relief circuit for protection) communicating the mechanical seal (4B, 24B) on the other (the end portion being separated from the equipment supplying power, for example) with the mechanical seal (4A, 24A) on the one (the end portion close to the equipment supplying power, for example), the pressure operating on the other mechanical seal (4B, 24B) can be relieved to the relief circuit (9, 29) for mechanical seal through the circuit (5, 25).

In the present invention, in a case that the hollow shaft (51, 61, 71, 81, 91) is supported by the supporting member disposed on a side separated from the cover portion (7) and the supporting member disposed in the vicinity of the cover portion (7), since the hollow shaft (51, 61, 71, 81, 91) is supported at two spots being separated in the axial direction, that is, the hollow shaft is supported by a manner so-called both-end supporting, and thus, the hollow shaft (51, 61, 71, 81, 91) can be accurately centered with the rotation driving shaft (103) and pump efficiency can be improved, as compared with the case of supporting with a single supporting member. The supporting member may be a bearing bush (19, 54) or may be constructed as direct receiving by forming a film of a material which improves abrasion resistance on a surface of an insertion hole for the hollow shaft (51, 61, 71, 81, 91) of the case (8) or the cover portion (7).

In this case, by providing the supporting member (bearing bush 54) disposed in the vicinity of the cover portion (7), the circuit (relief circuit 5, 25 for protection in the hollow shaft 1, 21) communicating the mechanical seals (4A, 4B, 24A, 24B) on the both end portions in the axial direction of the hollow shaft (51, 61, 71, 81, 91) each other cannot be constructed any more.

However, in the present invention, in a case that the circuit (55) communicating the mechanical seal (4B, 24B) on the cover portion (7, 27) side and the intake portion (intake port 14) is provided, the pressure operating on the mechanical seal (4B, 24B) on the cover portion side can be relieved to the intake portion (intake port 14) by the circuit (55). And a length dimension and pipe resistance of the circuit (55) communicating the mechanical seal (4B, 24B) on the cover portion (7, 27) side and the intake portion (intake port 14) are smaller than the length dimension and pipe resistance of the circuit (5, 25) communicating the mechanical seals (4A, 4B, 24A, 24B) on the both end portions in the axial direction of the hollow shaft (1, 21), and thus, the pressure operating on the mechanical seal (4B, 24B) on the cover portion side can be relieved reliably and an operative effect as the relief circuit is reliably carried on.

In the present invention, in a case that the mechanism for transmitting a torque but transmitting no thrust is constructed by the splines formed on the outer peripheral surface of the rotation driving shaft (103) and on the inner peripheral surface of the hollow shaft (81), the splines is only formed in the region (region immediately below the vane) in the vicinity of the vane in the axial direction of the rotation driving shaft (103) and the hollow shaft (81), the lubricant-oil filling space (large diameter portion) is constructed in which space a lubricant oil (grease oil, for example) is filled in the region where the splines of the rotation driving shaft (103) and the hollow shaft (81) are not provided, and the sealing member (82: a square ring, for example) for the lubricant oil in the region on the side separated from the cover portion (7) is provided, even if the lubricant oil is filled in the lubricant-oil filling space, the lubricant oil is sealed by the sealing material (82) and the state in which the lubricant oil is filled can be maintained.

In a case that the driving source is an internal combustion engine, torque fluctuation being specific to the internal combustion engine generates the collisions of teeth of the male and female splines against each other (teeth are hit by each other) through the rotation driving shaft (103) and the hollow shaft (81, 91), and therefore, a tooth surface of the spline is damaged, however, by filling the lubricant oil in the lubricant-oil filling space, the lubricant oil is interposed between teeth of the male and female splines and a buffer operation is carried on by the lubricant oil as a cushion, and thus, damage on the tooth surface caused by the collision between the teeth is reduced.

Here, in a case that a sealing member for lubricant oil such as a square ring should be installed, for example, if the mechanism for transmitting a torque but transmitting no thrust is constructed by the splines formed on the whole regions in the axial direction on the outer peripheral surface of the rotation driving shaft and the inner peripheral surface of the hollow shaft, it is necessary to cut off the spline (of the inner peripheral surface of the hollow shaft) at a place where the sealing member for the lubricant oil should be installed by machining so as to form a cylindrical surface, and then, it is necessary to provide a square ring.

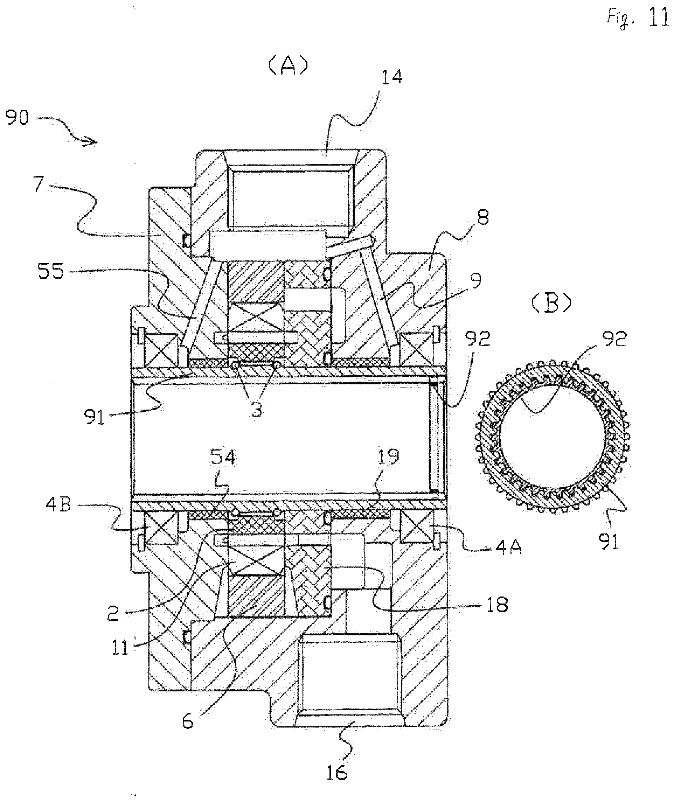

On the other hand, in the present invention, if the sealing member (92: spline seal) of the lubricant oil to be provided in the region on the side being separated from the cover portion (7) is constructed by a sealing member (92: spline seal) with projections and recesses formed on the outer periphery thereof, the projections and recesses being formed corresponding to the spline (female spline) are formed on the inner peripheral surface of the hollow shaft (91), without cutting off the spline (of the inner peripheral surface of the hollow shaft) at a place where the sealing member for the lubricant oil should be provided by machining so as to form a cylindrical surface, or without increasing a machining cost of the hollow shaft(91), the sealing member (92: spline seal) for the lubricant oil can be provided, by assembling the spline seal (92) from a distal end side (right end side in Fig. 11) of the hollow shaft (91) in a manner that sealing the male and female splines in a state where the spline of the rotation driving shaft (103) and the spline of the hollow shaft (91) are engaged with each other, and by inserting the outer peripheral surface of the rotation driving shaft (103) into the space inward in the radial direction of the spline seal (92).

### [Brief Description of the Drawings]

Fig. 1 is a sectional view showing an outline of an embodiment of the present invention.
Fig. 2 is a sectional view showing a first embodiment of the present invention.
Fig. 3 is an A-B line arrow-view sectional view of Fig. 2.
Fig. 4 is an explanatory view showing a manner that a rotor is mounted on a hollow shaft by a wire ring.
Fig. 5 is an explanatory view schematically showing a circuit for relieving a pressure operating on a mechanical seal.
Fig. 6 is a sectional view showing a second embodiment of the present invention.
Fig. 7 shows a third embodiment of the present invention, in which Fig. 7 (A) is a sectional view and Fig. 7 (B) is a partial side view showing a state that a key and a keyway are engaged with each other.
Fig. 8 shows a fourth embodiment of the present invention, in which Fig. 8 (A) is a sectional view and Fig. 8 (B) is a partial plan view showing a state that a spring pin is engaged.
Fig. 9 shows a fifth embodiment of the present invention, in which Fig. 9 (A) is a sectional view and Fig. 9(B) is a partial side view showing a state that an input shaft is fixed to a hollow shaft.
Fig. 10 is a sectional view showing a sixth embodiment of the present invention.
Fig. 11 are views showing a variation of the sixth embodiment of the present invention, in which Fig. 11(A) is a sectional view, and Fig. 11 (B) is a partial side view showing the hollow shaft when a spline seal is installed.
Fig. 12 is an explanatory view schematically showing a state in which a prior-art vane pump is mounted on a transmission device.

### [Embodiments of Invention]

Embodiments of the present invention will be described below by referring to the attached drawings.

First, by referring to Fig. 1, a summary of the embodiments of the present invention will be described. The same members described by referring to Fig. 12 are given the same reference numerals, and description will be omitted.

In Fig. 1, the output shaft 105 of the driving source 102 (for example, an internal combustion engine) is coupled with the input shaft 103 of the transmission device 101 through the coupling 106, and the vane pump 10 (or 20) is disposed on an end surface TF on the driving source 102 side of the transmission device 101.

The vane pump 10 (20) includes the hollow shaft 1 (or 21) and a female spline is engraved on the inner peripheral surface of the shaft 1 over the axial direction. Into the hollow portion of the hollow shaft 1 (21), the input shaft 103 (coupled with the rotation driving shaft of the driving source 102 through the coupling 106) of the transmission device 101 is inserted.

Though not shown clearly in drawings, the input shaft 103 of the transmission device 101 is reliably supported by a rolling bearing (not shown) on the transmission device 101 side.

As shown in Fig. 1, the vane pump 10 (20) is directly mounted on the input shaft 103 of the transmission device 101. And in the input shaft 103 (the rotation driving shaft of the driving source 102) of the transmission device 101, a male spline fitted with the female spline is engraved in the outer peripheral surface overlapped with the hollow shaft 1 (21) of the vane pump 10 (20) so that power transmission from the input shaft 103 to the hollow shaft is carried out by spline fitting between the female spline and the male spline.

Thus, without providing other coupling (such as the second coupling 109 in Fig. 12, for example), the input shaft 103 of the transmission device 101 directly rotates/drives the vane pump 10 (20).

Moreover, in the embodiment shown in Fig. 1, since the vane pump 10 (20) is directly rotated/driven by the input shaft 103 of the transmission device 101, it is not necessary to provide a gear mechanism (gears 107, 108 in Fig. 12) or the second shaft 104 (Fig. 12) inside the transmission device 101.

That is, in the embodiment, there is no loss in engagement portions between the shaft 103 and the gear 107, the second shaft 104 and the gear 108, and the gear 107 and the gear 108 generated in the case of the prior art in Fig. 12, and there is no loss, either, in the coupling (the second coupling 109 in Fig. 12) which couple the vane pump 10 (20) with the second shaft 104. Therefore, the transmission efficiency is improved and the transmission device (101) can be made smaller.

Moreover, in the embodiment shown in Fig. 1, since the second shaft 104 (shown in Fig. 12 illustrating the prior art) is not provided, a bearing for supporting the second shaft 104 (Fig. 12) is not needed either, and since it is not necessary to provide the gear mechanism inside the transmission device 101 either, as described above, the number of constructional components is reduced largely, and component management becomes extremely easy.

Furthermore, since it is merely necessary that the input shaft 103 of the transmission device 101 is inserted into (fitted with) the hollow shaft 1 (21) of the vane pump 10 (20), centering of the hollow shaft 1 (21) and the input shaft 103 of the transmission device 101 is not necessary. Thus, working cost of the assembling process is remarkably reduced.

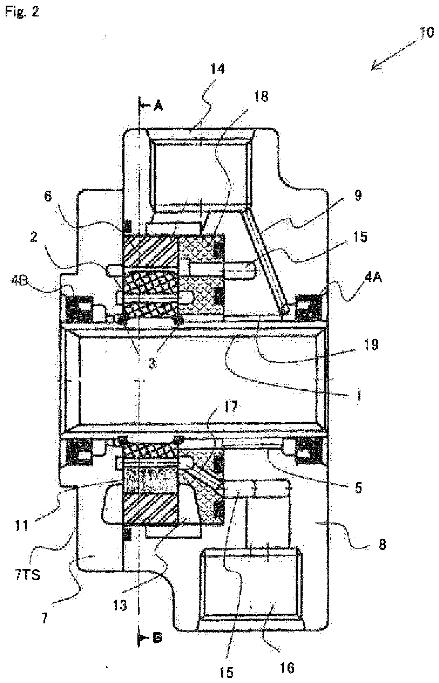

Next, by referring to Figs. 2 to 5, the first embodiment of the present invention will be explained.

The first embodiment shown in Figs. 2 to 5 is an embodiment according to the vane pump of a type in which a cam ring and a rotor are provided one respectively.

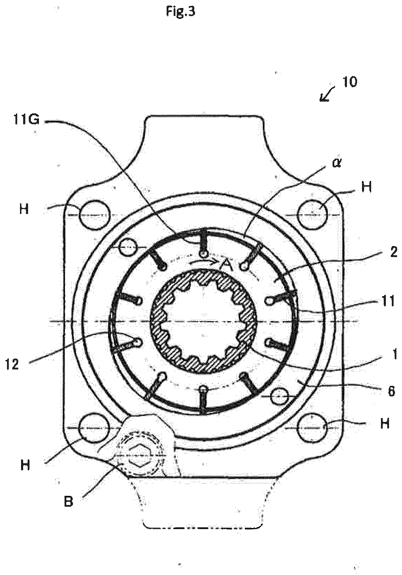

In Figs. 2 and 3, the hollow shaft 1 is disposed at the center of the vane pump 10, and as shown in Fig. 3, the inner peripheral surface of the hollow shaft 1 is constructed so as to be shaped as a female spline shaft. Since a spline shape is constructed in the hollow shaft 1, in the hollow shaft 1, vicinities of upper and lower ends are illustrated by three line segments, in Fig. 2.

In a case that the vane pump 10 is mounted on the transmission device 101 as shown in Fig. 1, for example, the input shaft 103 (solid shaft: Fig. 1) of the transmission device 101 is inserted into the hollow portion of the spline-shaped hollow shaft 1.

In Figs. 2 and 3, the surface outward in the radial direction of the spline-shaped hollow shaft 1 is mounted on the inner peripheral surface of the rotor 2 by spline fitting and incapable of relative rotation, then the rotor 2 is rounded by rounds of the hollow shaft 1. The rotor 2 may be mounted on the hollow shaft 1, incapable of axial movement, but in this embodiment, it is preferable that the rotor 2 is mounted on the shaft 1 so as to limit movement of the rotor 2 in the axial direction, as written hereinafter.

On the rotor 2, a plurality of radial vane grooves 11G (Fig. 3) extending in the radial direction is formed, and the vane 11 is inserted into the vane groove 11G.

A vane 11 is constructed movably in the radial direction along the vane groove 11G, and a part of a pressure oil ejected from an ejection port 16 during driving of the vane pump is supplied to a pressure-oil storage portion 12 for vane through a circuit 17 for pressure loading (pressure loading), whereby the vane 11 is urged outward in the radial direction and protruded, and an end portion outward in the radial direction of the vane 11 slides on the inner peripheral surface of the cam ring 6. Here, the pressure-oil storage portion 12 for vane is formed in the rotor 2 (refer to Fig. 3).

During driving of the vane pump 10, the rotor 2 is rotated in an arrow A direction (Fig. 3), and with the rotation of the rotor 2, a working fluid flows into a pump chamber α from the intake port 14 in the vane pump 10 through an intake circuit 13 of the cam ring 6. Here, the pump chamber α is defined by the adjacent vane 11, the outer surface of the rotor 2, and the inner peripheral surface of the cam ring 6.

A position of the pump chamber α is changed with the rotation of the rotor 2 (corresponding to a circumferential position of the cam ring 6), and a size (volume) of the pump chamber α is also changed with the rotation of the rotor 2 (corresponding to the circumferential position of the cam ring 6) .

That is, the working fluid supplied from the intake port 14 flows into the pump chamber α via the intake circuit 13. Then, by means of contracting the volume of the pump chamber αs, a pressure is applied and the working fluid is ejected from the ejection port 16 via an ejection circuit 15.

As shown in Fig. 2, the vane pump 10 includes a body portion 8 and the cover portion 7.

In the body portion 8, the hollow shaft 1, the rotor 2, the vane 11 (movable in the vane groove of the rotor 2), and the cam ring 6 are accommodated.

Then, in Fig. 2, the pressure plate 18 is disposed in the body portion 8. As described above, the circuit 17 for pressure loading supplying the pressure oil to the pressure-oil storage portion 12 for vane is formed on the pressure plate 18.

In the body portion 8 accommodating the rotor 2, the cam ring 6 and the like, the cover portion 7 is disposed on its opening side (left side in Fig. 2), and the cover portion 7 is fixed to the body portion 8.

As shown in Fig. 2, the intake port 14 for the working fluid is provided in the body portion 8, and the intake port 14 communicates with the intake circuit 13 for the working fluid on the cam ring 6 side (inner side in the radial direction).

Moreover, the ejection circuit 15 for the working fluid is provided in the body portion 8, and the ejection circuit 15 communicates with an outlet port 16 for the working fluid.

Since the rotation driving shaft (the input shaft 103 of the transmission device 101 shown in Fig. 1, for example: not shown in Fig. 2) is inserted into the hollow portion on the inner side in the radial direction of the hollow shaft 1, even if the force in the rotation shaft direction (force in the thrust direction) operates on the rotation driving shaft (input shaft 103, for example), the rotation shaft only slides on the hollow portion of the hollow shaft 1. In other words, even if the force in the axial direction (thrust direction) of the input shaft 103 (Fig. 1) of the transmission device 101 operates, for example, the hollow shaft 1 does not load the force in the axial direction (force in the thrust direction). Thus, even if the rotor 2 is mounted on the hollow shaft 1, the force in the axial direction (force in the thrust direction) operating on the rotation driving shaft (input shaft 103 of the transmission device 101) is not transmitted to the rotor 2, and an inconvenience such as damage on the rotor 2 by the force (force in the thrust direction) does not happened. Therefore, the rotor 2 can be mounted on the hollow shaft 1.

Here, by mounting the rotor 2 on the hollow shaft 1, there is an operative effect that the hollow shaft 1 is prevented to be removed from the vane pump 10.

In order to rotate the rotor 2, it is necessary to be a gap (approximately 10 µm, for example) between the rotor 2 and the cover portion 7 adjacent to the rotor 2 or the pressure plate 18. Here, if the rotor 2 and the hollow shaft 1 are completely fixed (incapable of relative rotation and incapable of axial movement), in a case that the hollow shaft 1 is moved in the axial direction, there is inconvenience that the rotor 2 collides against the cover portion 7 or the pressure plate 18.

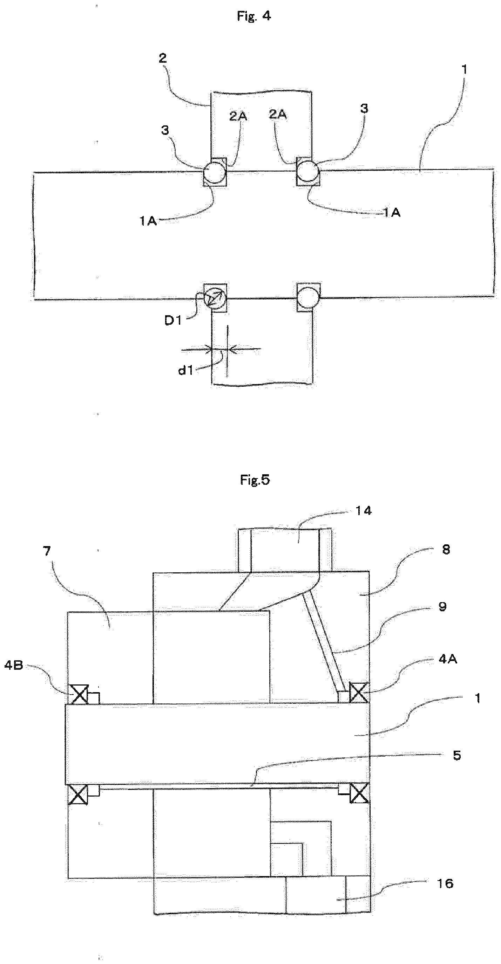

Reversely, in the embodiments shown in drawings, as a manner that the rotor 2 is mounted on the hollow shaft 1 by the wire ring 3 so as to limit movement in the axial direction, as shown in Fig. 4, on the cover portion 7 side and on the pressure plate 18 side with respect to the rotor 2, the shaft-side recess portion 1A is formed on the hollow shaft 1 side and the stepped portion 2A is formed on the rotor 2 side. And in the state in which the hollow shaft-side recess portion 1A and the rotor-side stepped portion 2A are aligned, the wire ring 3 is disposed so as to be place across the hollow shaft-side recess portion 1A and the rotor-side stepped portion 2A. Moreover, the male spline is engraved on the surface between the shaft-side recess portions 1A, 1A juxtaposed in the axial direction, the female spline is engraved on the surface between the rotor-side stepped portions 2A, 2A juxtaposed in the axial direction similarly, and the rotating power is transmitted from the hollow shaft 1 to the rotor 2, the shaft 1 and rotor 2 are coupled by spline-fitting the male spline and the female spline as a manner that the shaft 1 and rotor 2 are incapably relating to rotation thereof.

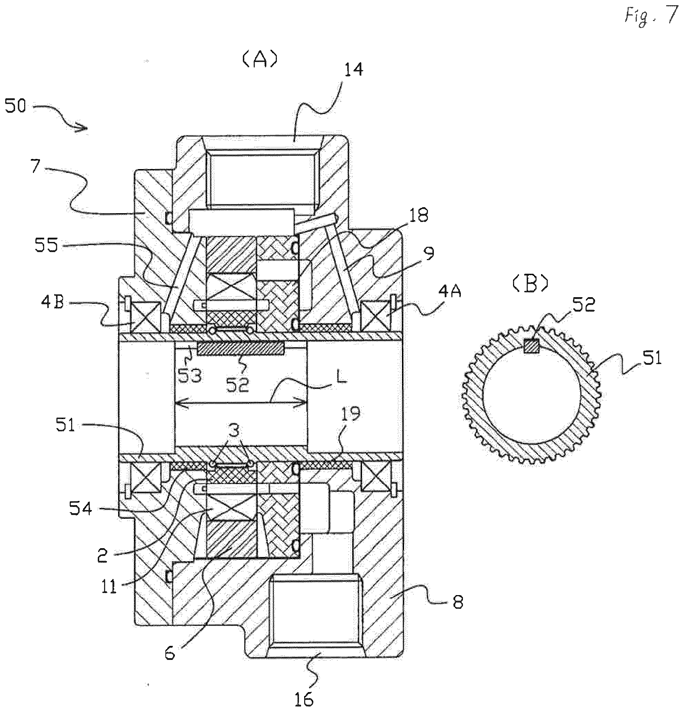

Here, the rotor-side stepped portion 2A is formed on the both side surfaces of the rotor 2. In Fig. 4, the depth dimension d1 is expressed smaller than the diameter D1 of the wire rod of the wire ring 3, but the depth dimension d1 of the rotor-side stepped portion 2A is preferably larger than the diameter D1 of the wire rod of the wire ring 3 (see Fig. 7 to 11) . That is because, if the depth dimension d1 of the rotor-side stepped portion 2A is larger than the diameter D1 of the wire rod of the wire ring 3, the wire ring 3 is accommodated in the rotor 2, and there is no more concern of interference with the wire ring 3, and thus, the design of the pump construction on the both side surfaces of the rotor 2 is made easy.

By being constructed as the manner shown in Fig. 4, when the hollow shaft 1 and the rotor 2 are mounted by the wire ring 3, the gap is generated between the hollow shaft 1 and the rotor 2. By means of the presence of such the gap, even if the hollow shaft 1 is moved in the axial direction, an allowance is generated between the rotor 2 and the cover portion 7 or the pressure plate 18 for a portion of the gap, and thus, the collision between the rotor 2 and the cover portion 7 or the pressure plate 18 is prevented by the allowance.

As described above, in Fig. 2, even if the force in the axial direction (the force in the thrust direction) of the input shaft 103 (Fig. 1) of the transmission device 101 operates, for example, the hollow shaft 1 does not load the force in the axial direction, but the input shaft 103 merely slides on the hollow portion in the hollow shaft 1.

Moreover, since the rotation driving shaft (input shaft 103 of the transmission device 101) which is a solid shaft is inserted through the hollow portion in the hollow shaft 1, the hollow shaft 1 is not biased in the radial direction unless the rotation driving shaft (input shaft 103 of the transmission device 101) makes a motion such as precession biased in the radial direction. And then, though not shown clearly, since the rotation driving shaft (input shaft 103 of the transmission device 101, for example) which is a solid shaft is reliably supported by the rolling bearing (not shown) on the transmission device 101 side, it is not biased in the radial direction.

However, in a case that such a situation occurs that the hollow shaft 1 is biased in the radial direction, inconvenience situation is happened in the vane pump 10. Therefore, in preparation for such situation (the situation in which the hollow shaft 1 is biased in the radial direction), as shown in Fig. 2, by disposing the bearing bush 19 (sliding bearing) on the body portion 8 side and by supporting the hollow shaft 1 by means of the bearing bush 19, the hollow shaft 1 is prevented from being biased in the radial direction.

The bearing bush 19 operates as a sliding bearing, and thus, in the first embodiment shown in Figs. 2 to 5, the rolling bearing is omitted and the sliding bearing is merely provided.

Here, in a case that the driving source 102 is an internal combustion engine, the bearing bush 19 for supporting the hollow shaft 1 in the radial direction is needed. However, in a case that the driving source (102) is an electric motor, the bearing bush 19 for supporting the hollow shaft 1 in the radial direction can be omitted.

As described above, in the first embodiment shown in Figs. 2 to 5, the rolling bearing is not provided but the hollow shaft 1 is supported on the body portion 8 of the vane pump 10 by the bearing bush 19, but the bearing bush 19 does not have a function of sealing oil, that is, a working fluid. Thus, as shown in Fig. 2, the mechanical seals 4 are disposed on both end portions in the axial direction of the vane pump 10 (the body portion 8 side end portion and the cover portion 7 side end portion: both right and left end portions in Fig. 2) . Here, in Fig. 2, the mechanical seal on the body portion 8 side end portion is shown by reference numeral "4A", and the mechanical seal on the cover portion 7 side end portion is shown by reference numeral "4B". In other words, "the mechanical seal 4" is an expression comprehensively indicating the mechanical seals 4A and 4B.

In the case of the prior-art vane pump, as shown in Fig. 12, the rotation driving force is supplied by the shaft 104, but the shaft 104 does not penetrate the vane pump 100. Thus, in the case of the prior-art vane pump 100 shown in Fig. 12, it is not necessary to provide a mechanical seal on a side (right side in Fig. 12) separated from the transmission device 101 in the shaft 104 in the vane pump 100. That is, in the prior art vane pump, the mechanical seal (not shown) is provided only on the end portion close to the equipment (transmission device 101) for supplying power, and there is little necessity to provide the mechanical seal on the end portion separated from the equipment for supplying the power.

Reversely, in the vane pump 10 according to the first embodiment in which the solid shaft (not shown in Fig. 2) penetrates the hollow shaft 1, the mechanical seals 4A and 4B are provided on the both end portions in the axial direction.

Also, in the body portion 8, the relief circuit 9 for mechanical seal is provided in order to communicate the back portion (left side in Fig. 2) of the mechanical seal 4A on the body portion 8 side end portion (right side in Fig. 2) with the intake port 14.

Here, in the case of the prior-art vane pump, since the mechanical seal is provided only on one end portion in the axial direction, it is necessary to provide the relief circuit merely on the end portion on the side where the mechanical seal is provided, which relief circuit prevents a situation that a pressure exceeding an allowable value operates to the mechanical seal. Thus, in the prior art, as described above with reference to Fig. 2, the relief circuit 9 for mechanical seal (or a circuit corresponding to that) communicating the back portion (left side in Fig. 2) of the mechanical seal 4A (on the right side) of the body portion 8 side end portion with the intake port 14 is merely provided.

However, in the embodiments shown in drawings in which the mechanical seals 4A, 4B are disposed on the both end portions in the axial direction (the body portion 8 side end portion and the cover portion 7 side end portion), it is required to provide a mechanism for relieving the pressure operating on the mechanical seal 4B (mechanical seal on the end portion separated from the equipment for supplying power: the mechanical seal considered to have little necessity to be provided in the prior art) on the other end portion in the axial direction (left end portion in Fig. 2 and the cover portion 7 side end portion).

Because there is a possibility that a back pressure of the mechanical seal 4B provided on the other end portion in the axial direction (the left end portion in Fig. 2 and the cover portion 7 side end portion) exceeds an allowable pressure.

In the embodiments shown in drawings, as shown in Figs. 2 and 5, there is a mechanism for relieving the back pressure of the mechanical seal 4B on the side where the relief circuit 9 for mechanical seal is not provided.

In Figs. 2 and 5, as described above, the relief circuit 9 for mechanical seal is provided which circuit communicates the back portion of the mechanical seal 4A on the body portion 8 side end portion (right side in Fig. 2) with the intake port 14. And the back portion of the mechanical seal 4A and the back portion of the mechanical seal 4B (mechanical seal on the side separated from the relief circuit 9 for mechanical seal: the mechanical seal on the left side in Figs. 2 and 5) of the cover portion 7 side end portion are communicated through the relief circuit 5 for protection. This relief circuit 5 for protection is provided on a boundary portion between the cover portion 7 as well as the body portion 8 and the hollow shaft 1, and only one relief circuit 5 for protection is provided in Fig. 5, but a plurality of the relief circuits can be provided.

In other words, the mechanical seal 4B (the mechanical seal on the side separated from the relief circuit 9 for mechanical seal) on the cover portion 7 side end portion communicates with the relief circuit 9 for mechanical seal through the relief circuit 5 for protection.

Reference numeral 16 shown in Figs. 2 and 5 indicates an ejection port formed on the body portion 8.

In Figs. 2 and 5, the pressure operating on the back portion of the mechanical seal 4B (mechanical seal on the left side) of the cover portion 7 side end portion is transmitted to the relief circuit 9 for mechanical seal through the relief circuit 5 for protection and the mechanical seal 4A (mechanical seal on the right side) of the body portion 8 side end portion and is relieved into the intake port 14.

Thus, in Figs. 2 and 5, even if a large pressure is generated on the back portion of the mechanical seal 4B (mechanical seal on the left side) of the cover portion 7 side end portion, the large pressure is immediately relieved into the intake port 14 through the relief circuit 5 for protection, the mechanical seal 4A (mechanical seal on the right side) of the body portion 8 side end portion and the relief circuit 9 for mechanical seal. Thus, even if the large pressure operates on the back portion of the mechanical seal 4B (mechanical seal on the left side) of the cover portion 7 side end portion, breakage of the mechanical seal 4B is prevented.

In Fig. 3, in order to mount the cover portion 7 and the body portion 8 on the end surface TF (see Fig. 1) of the transmission device 101, for example, there are bolt holes H at four spots. By inserting a bolt (not shown) inserting through the cover portion 7 and the body portion 8 into the bolt hole H, the vane pump 10 is mounted on the end surface TF of the transmission device 101, for example. When the vane pump 10 is mounted on the end surface TF (Fig. 1) of the transmission device 101, the vane pump 10 is mounted on the end surface TF in a manner that an end surface 7TS (Fig. 2) on the cover portion 7 side of the vane pump 10 contacts with on the end surface TF side of the transmission device 101.

Here, a joining bolt B shown in Fig. 3 is a bolt for joining the body portion 8 and the cover portion 7 of the vane pump 10. That is, in a state that the body portion 8 and the cover portion 7 are joined by the joining bolt B, it is possible to mount the body portion 8 and the cover portion 7 to the end surface TF of the transmission device 101, for example, by inserting a bolt, which is not shown, into the bolt hole H.

However, in a case that the vane pump 10 is mounted on the transmission device 101, for example, by inserting a bolt, which is not shown, into the bolt hole H, since the body portion 8 and the cover portion 7 of the vane pump 10 are also integrally joined by the bolt which is not shown, the joining bolt B in Fig. 3 can be omitted.

In the vane pump 10 according to the embodiment in Figs. 1 to 5, by fitting (or inserting) the rotation driving shaft (input shaft 103 of the transmission device 101, for example) of the driving source 102 with the hollow portion of the spline-shaped hollow shaft 1, the vane pump 10 can be directly rotated/driven by the rotation driving shaft 103 without interposing another coupling device.

As a result, in a case that the vane pump 10 is used in a manner that the vane pump 10 is mounted on the transmission device 101, for example, since the vane pump 10 is directly rotated/driven by the input shaft 103 of the transmission device 101, it is not necessary to provide a gear mechanism for transmitting a rotation driving force and a shaft for rotating/driving a vane pump separately, and also, it is not necessary to provide a coupling mechanism between the vane pump 10 and the driving shaft. Thus, there is no transmission loss by coupling, meshing between the gears and the like, transmission efficiency is improved, and it is possible to become the transmission device 101 smaller.

And then, since the gear mechanism for transmitting a rotation driving force or the like is not necessary, the number of constructional components is largely reduced, and component management becomes extremely easy.

Moreover, since it is only necessary to insert the power transmission shaft (input shaft 103 of the transmission device 101, for example) into the hollow portion of the hollow shaft 1 of the vane pump 10, centering of the power transmission shaft and the hollow portion of the hollow shaft 1 are not necessary, and therefore, a labor cost for assembling work of the vane pump 10 is remarkably reduced.

Moreover, according to the vane pump 10 of the first embodiment, since the rotation driving shaft (solid shaft: the input shaft 103 of the transmission device 101 shown in Fig. 1, for example) of the driving source 102 is inserted into the hollow portion of the inner side in the radial direction of the hollow shaft 1, even if the force in the rotation shaft direction (the force in the thrust direction) operates on the rotation driving shaft 103 (input shaft), the rotation driving shaft 103 only slides on the hollow portion of the hollow shaft 1, and the hollow shaft 1 does not load the force in the axial direction.

Moreover, the hollow shaft 1 is not biased in the radial direction, unless the rotation driving shaft 103 which is a solid shaft makes a motion such as precession biased in the radial direction. And then, in a case that the rotation driving shaft 103 is reliably supported by a rolling bearing or the like on the rotation driven side (the transmission device 101, for example), the rotation driving shaft 103 is not biased in the radial direction.

Furthermore, according to the vane pump 10 of the first embodiment, even if the force in the rotation shaft direction (force in the thrust direction) operates on the rotation driving shaft 103 of the driving source 102, as described above, the hollow shaft 1 does not load the force in the axial direction. Thus, even if the rotor 2 is mounted on the hollow shaft 1, the force in the axial direction of the rotation shaft 103 of the driving source 102 is not transmitted to the rotor 2.

And then, since the hollow shaft 1 and the rotor 2 are mounted by the wire ring 3, and the wire ring 3 is disposed in the manner that the wire ring extends across the shaft-side recess portion 1A and the rotor-side stepped portion 2A in the state that the shaft-side recess portion 1A formed on the hollow shaft 1 and the rotor-side stepped portion 2A formed on the rotor 2 are aligned, there is a gap in a portion in which the hollow shaft 1 and the rotor 2 are mounted, and even if the hollow shaft 1 is moved in the axial direction, the allowance is formed corresponding to the portion of the gap, and the rotor 2 is not moved due to the portion of the allowance, and the rotor 2 is prevented to collide against the cover portion 7 or the pressure plate 18.

In addition, according to the vane pump 10 of the first embodiment, since the mechanical seals 4A, 4B are disposed on the both end portions in the axial direction (the body portion 8 side end portion and the cover portion 7 side end portion) of the vane pump 10, and the relief circuit 5 for protection communicating the mechanical seal 4A of the body portion 8 side end portion with the mechanical seal 4B of the cover portion 7 side end portion is provided, the mechanical seal 4A is communicated with the intake port 14 through the relief circuit 9 for mechanical seal, the pressure operating on the mechanical seal 4B of the cover portion 7 side end portion can be relieved to the relief circuit 9 for mechanical seal via the relief circuit 5 for protection.

Thus, even if an excessive pressure operates on the mechanical seal 4B of the cover portion 7 side end portion, breakage of the mechanical seal 4B is prevented.

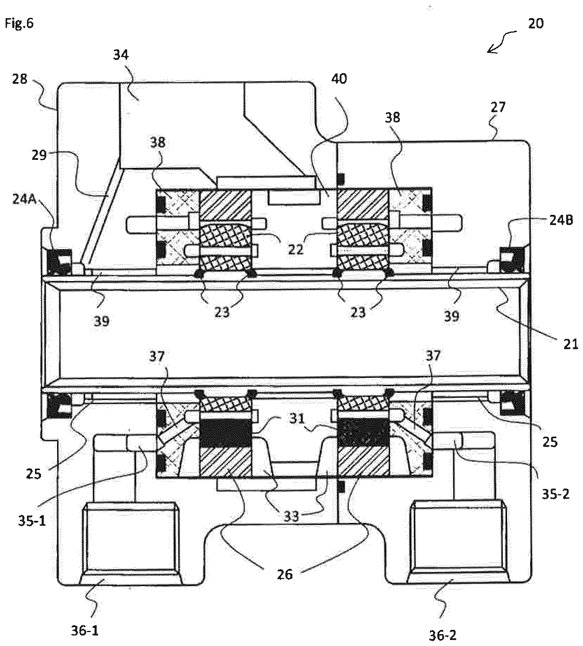

Subsequently, the second embodiment of the present invention will be explained hereinafter with reference to Fig. 6.

In the first embodiment shown in Figs. 2 to 5, the cam ring and the rotor are provided one respectively, but in the second embodiment shown in Fig. 6, the cam ring and the rotor are provided two respectively.

Constructions shown in Fig. 6 which are different from the first embodiment in Figs. 2 to 5 will be mainly described hereinafter.

In Fig. 6, the hollow shaft 21 constructed so as to be shaped as a spline shaft is disposed at the center of the vane pump 20, and in a case that the vane pump 20 is mounted on the transmission device 101 as shown in Fig. 1, for example, the input shaft 103 (see Fig. 1) of the transmission device 101 is inserted into the hollow portion of the spline-shaped hollow shaft 21.

The vane pump 20 includes the body portion 28 and the cover portion 27.

The body portion 28 located on the left side in Fig. 6 accommodates the hollow shaft 21, the rotor 22, the vane 31, and the cam ring 26. On the other hand, the cover portion 27 located on the right in Fig. 6 accommodates the hollow shaft 21, the rotor 22, the vane 31, and the cam ring 26. The cover portion 27 covers an opening side of the body portion 28 and fixes the body portion 28.

A bearing bush 39 is disposed in the body portion 28 and the cover portion 27, respectively, and the hollow shaft 21 is supported in a rotatable manner by the bearing bush 39.

The pressure plates 38, 38 are disposed on the cover portion 27 side (right side in Fig. 6) of the rotor 22 and the cam ring 26 accommodated in the body portion 28 and on the opposite side (left side in Fig. 6), and an intermediate plate 40 is disposed in the body portion 28.

The pressure plates 38, 38 are disposed on the body portion 28 side (left side in Fig. 6) of the rotor 22 and the cam ring 26 accommodated in the cover portion 27 and on the opposite side (right side in Fig. 6).

The rotor 22 and the cam ring 26 accommodated in the body portion 28 and the rotor 22 and the cam ring 26 accommodated in the cover portion 27 are disposed by ensuring an appropriate distance by means of the intermediate plate 40.

On the pressure plates 38, 38, a pressure loading circuits 37, 37 are formed, and the pressure loading circuit 37 communicates with a pressure-oil storage portion for vane, not shown, and also communicates with ejection circuits 35-1, 35-2 for the working fluid which will be described hereinafter.

On the body portion 28 of the vane pump 20, an intake port 34 for the working fluid is provided, and the intake port 34 communicates with a pump chamber (not shown in Fig. 6) through an intake circuit 33 of the intermediate plate 40 accommodated in the body portion 28.

On the body portion 28 and the cover portion 27, ejection ports 36-1, 36-2 for the working fluid are provided, respectively, and the ejection ports 36-1, 36-2 communicate with the ejection circuits 35-1, 35-2 for the working fluid on the cam ring 26 side (via a circuit, not shown), respectively.

As shown in Fig. 6, the rotors 22, 22 on the body portion 28 side and the cover portion 27 side are mounted on the hollow shaft 21 by the wire rings 23, 23, respectively.

The mechanical seals 24, 24 are disposed on the both end portions in the axial direction of the vane pump 20, that is, on the body portion 28 side end portion (left side in Fig. 6) and the cover 27 side end portion (right side in Fig. 6), respectively. Here, in Fig. 6, the mechanical seal on the body portion 28 side end portion is shown by reference numeral 24A, and the mechanical seal on the cover portion 7 side end portion is shown by reference numeral 24B. In other words, the mechanical seal 24 is a comprehensive expression indicating the mechanical seals 24A and 24B.

On the body portion 28, the relief circuit 29 for mechanical seal is formed, and the relief circuit 29 for mechanical seal communicates the back portion of the mechanical seal 24A of the body portion 28 side end portion (left end portion in Fig. 6) with the intake port 34.

Further, the back portion of the mechanical seal 24A (mechanical seal on the left side in Fig. 6) of the body portion 28 side end portion (left end portion in Fig. 6) and the back portion of the mechanical seal 24B (mechanical seal on the right side in Fig. 6) of the cover 27 side end portion are communicated through the relief circuit 25 for protection. In Fig. 6, one piece of the relief circuit 25 for protection is formed on the boundary portion between the cover 27 as well as the body portion 28 and the hollow shaft 21, but a plurality of the relief circuit 25 can be formed.

The mechanical seal 24B (mechanical seal on the right side in Fig. 6) of the cover 27 side end portion communicates with the relief circuit 29 for mechanical seal through the relief circuit 25 for protection and the mechanical seal 24A (mechanical seal on the left side in Fig. 6) of the body portion 28 side end portion (left end portion in Fig. 6).

The other constructions and operative effects of the second embodiment shown in Fig. 6 are similar to those of the embodiment described with reference to Figs. 1 to 5.

The third embodiment to the sixth embodiment of the present invention will be described with reference to Fig. 7 to 11. The third embodiment to the sixth embodiment shown in Fig. 7 to 11 are embodiments according to a vane pump of a type in which the cam ring and the rotor are provided one respectively similar to the first embodiment shown in Figs. 1 to 5. In Fig. 7 to 11, the same members as those described with reference to Figs. 1 to 5 are shown by the same reference numerals respectively, and the explanation thereof will be omitted.

First, the third embodiment of the present invention will be explained with reference to Fig. 7.

In a case that the vane pump 50 is mounted on the transmission device 101 as shown in Fig. 1, in Fig. 7, the input shaft 103 (solid shaft: refer to Fig. 1), not shown in Fig. 1, of the transmission device 101 is inserted into the hollow portion of the hollow shaft 51 of the vane pump 50.

In Fig. 7, the input shaft 103 (rotation driving shaft) and the hollow shaft 51 are connected in a manner that the rotation force (torque) is transmitted but the thrust force is not transmitted by engaging the key 52 and the keyway 53. That is, in the third embodiment shown in Fig. 7, the "mechanism for transmitting a torque but transmitting no thrust" is constructed by the key 52 and the keyway 53.

In Fig. 7, on the inner peripheral surface of the hollow shaft 51, the keyway 53 extending in a center axis direction of the hollow shaft is formed over a predetermined length L in a longitudinal direction of the hollow shaft 51 at least at one spot in a circumferential direction. On the other hand, on the input shaft 103 (rotation driving shaft, Fig. 1), the keyway 53 having the predetermined length L similar to the hollow shaft 51 is formed too, on a part of the outer peripheral surface of the region (region covered by the hollow shaft 51) which is inserted into the hollow shaft 51.

In a state shown in Fig. 7, the keyway 53 of the input shaft 103 and the keyway 53 of the hollow shaft 51 are disposed so that the circumferential positions thereof are aligned, and the kay 52 having the width dimension which is the generally the same as the width dimension of the keyway 53 is inserted (or mounted) to the keyway 53. Here, the axial length L of the keyway 53 is designed so that the axial length is equal to or more than the axial length of the key 52. In Fig. 7, the input shaft 103 (rotation driving shaft) is not shown.

As the result of insertion of the key 52 in the keyway 53, the input shaft 103 and the hollow shaft 51 become capable of relative movement merely in the axial direction of the hollow shaft 51 for a distance corresponding to a difference in the axial length between the keyway 53 and the key 52, and the thrust force from the input shaft 103 to the hollow shaft 61 is not transmitted. However, with regard to the circumferential direction, the hollow shaft 51 and the input shaft 103 are not capable of relative rotation, and the torque is transmitted from the input shaft 103 to the hollow shaft 51.

In the first embodiment shown in Figs. 1 to 5, the hollow shaft 1 is supported by the bearing bush 19 only.

On the other hand, in the third embodiment in Fig. 7, in the vicinity of the cover portion 7 on a rear end side (left side in Fig. 7) of the hollow shaft 51, the bearing bush 54 for supporting the hollow shaft 51 is provided on the cover 7 side. By means of this construction, the hollow shaft 51 is supports at two spots in the axial direction by the bearing bush 19 (bearing bush 19 disposed on a side separated from the cover portion 7) disposed on the body 8 side and the bearing bush 54 disposed in the vicinity of the cover portion 7, and a construction so-called "both-end supporting" is constructed, and then, the hollow shaft 51 is supports by said "both-end supporting" construction.

By supporting the hollow shaft 51 by the bearing bushes 19 and 54 (supporting members) in the both-end supporting manner, the hollow shaft 51 can be centered in parallel with the input shaft 103 and with high accuracy in a manner that rattling or the like does not happened relative to a case that the hollow shaft 51 is supported by a single bearing bush (supporting member). Thus, pump efficiency can be improved.

The supporting member may be also constructed by the bearing bushes 19 and 54 as shown in drawings. Alternatively, a film of a material improving abrasion resistance may be formed on a surface of the insertion hole of the case 8 or the hollow shaft 51 of the cover portion 7 so as to support the hollow shaft 51 directly (direct bearing). Moreover, it may be such constructions that the bearing bush is used on one side in the axial direction, while the other side is constructed as the above-mentioned direct bearing manner.

Here, in a case that the bearing bush 54 is provided, the relief circuit 5, 25 for protection as shown in the embodiment in Figs. 1 to 6 cannot be constructed.

Thus, in Fig. 7 of the third embodiment, instead of the relief circuit 5, 25 (refer to Figs. 2, 5, and 6: circuit communicating the mechanical seals 4A, 4B, 24A, and 24B on both end portions in the axial direction of the hollow shaft), a channel 55 for communicating directly the mechanical seal 4B on the cover portion 7 side (left side in Fig. 7) with the intake portion (intake port 14) is formed, as the relief circuit for protection. By means of this relief circuit 55 for protection (relief circuit for mechanical seal), the pressure operating on the mechanical seal 4B on the cover portion 7 side can be relieved to the intake portion (intake port 14).

In other words, in the third embodiment shown in Fig. 7, the pressure generated on the back portion of the mechanical seal 4A on the body portion 8 side end portion is relieved to the intake port 14 through the relief circuit 9 for mechanical seal, and the pressure generated on the back portion of the mechanical seal 4B on the cover portion 7 side end portion is relieved to the intake port 14 through the relief circuit 55 for mechanical seal.

The relief circuit 55 for protection (relief circuit for mechanical seal) has a length dimension and pipe resistance which are smaller than those of the relief circuits 5, 25 for protection in the embodiment shown in Figs. 1 to 6, and thus, the pressure operating on the mechanical seal 4B on the cover portion 7 side is reliably relieved, and the operative effect of the relief circuit is exerted reliably.

Here, the constructions of both-side supporting of the hollow shaft 51 by providing the bearing bush 54 in addition to the bearing bush 19 and the constructions of providing the relief circuit 55 for protection communicating directly the mechanical seal 4B on the cover portion 7 side with the intake port 14 can be used also in the fourth embodiment, the fifth embodiment, the sixth embodiment and variations thereof which will be described hereinafter.

The other constructions and operative effects of the third embodiment shown in Fig. 7 are similar to those of the embodiments shown in Figs. 1 to 6.

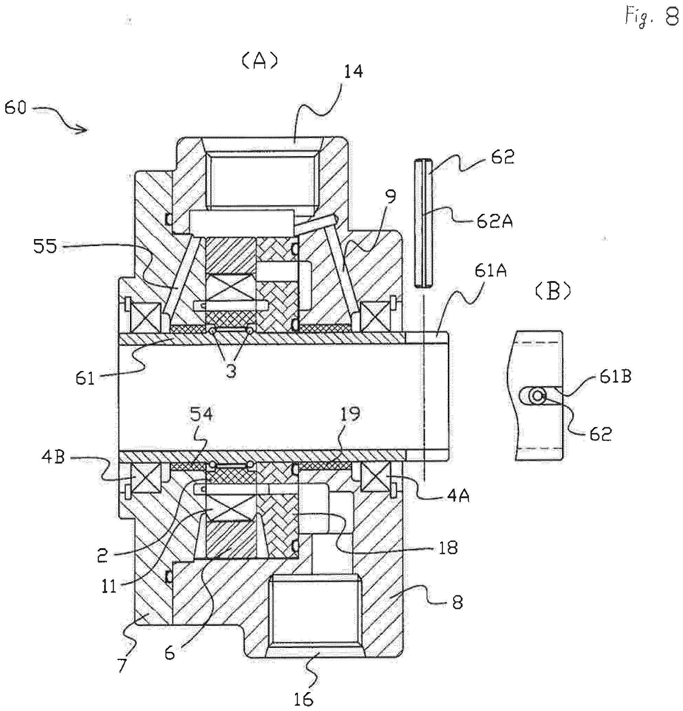

Subsequently, the fourth embodiment of the present invention will be described with reference to Fig. 8.

In the fourth embodiment shown in Fig. 8, by means of the spring pin 62, the input shaft 103 (solid shaft: Fig. 1) of the transmission device 101, not shown, and the hollow shaft 61 of the vane pump 60 are connected in a manner that the rotation force (torque) is transmitted but the thrust force is not transmitted. As will be described hereinafter, in the fourth embodiment shown in Fig. 8, the "mechanism which transmits the torque but does not transmit the thrust" is constructed by the engagement groove 61B penetrating the hollow shaft 61, a through hole (not shown) of the rotation driving shaft 103, and the spring pin 62 capable of being inserted into the engagement groove 61B and the through hole.

In Fig. 8, the axial dimension of the hollow shaft 61 is designed so as to be larger than a width of the pump case (the body portion 8 and the cover portion 7 of the vane pump 60), and the distal end (right end in Fig. 8) of the hollow shaft 61 is protruded (protruding portion 61A) from the pump case end portion (right end in Fig. 8: body portion 8 side end portion) .

On the protruding portion 61A of the hollow shaft 61, the engagement groove 61B into which the spring pin 62 is inserted is formed (opened), and the engagement groove 61B is formed on the same diameter of the hollow shaft 61 at a pair of positions being symmetrical to the shaft core in the circumferential direction of the hollow shaft 61.

The engagement groove 61B has a long hole shape (or a groove state) which long hole is opened in the body portion 8 side end portion (right side in Fig. 8), a width dimension (dimension in the circumferential direction of the hollow shaft) of the engagement groove 61B is designed so as to be substantially equal to the diameter of the spring pin 62 when the pin 62 is contracted, and an axial dimension (dimension in the axial direction of the hollow shaft 61) of the engagement groove 61B is designed so as to be larger than the diameter of the spring pin.

The spring pin 62 is formed having a hollow cylindrical shape having a notch portion 62A extending in the axial direction, and the diameter of the spring pin 62 is changed (enlarged) by an elastic repulsive force. The spring pin 62 is fitted in a state that the diameter of the spring pin 62 is contracted when the pin 62 is inserted into the engagement groove 61B and a through port, not shown, of the rotation driving shaft 103. And the axial length of the spring pin is designed so as to be larger than the diameter of the hollow shaft.

In the input shaft 103 (see Fig. 1) not shown in Fig. 8, a pin hole (through port), not shown, is formed, and said pin hole is formed at a position aligned with the position of the engagement groove 61 when the input shaft 103 is inserted into the hollow shaft 61. And the pin hole is a through hole (not shown) into which the spring pin 62 can be inserted, and an inner diameter of the pin hole is designed so as to be substantially equal to the diameter of the spring pin 62 being contracted.

When the input shaft 103 and the hollow shaft 61 are to be connected, the spring pin 62 is inserted and fitted into one of the engagement grooves 61B, 61B of the hollow shaft 61, the pin hole of the input shaft 103 (not shown in Fig. 8), and the other engagement groove 61B of the hollow shaft 61. As a result, the input shaft 103 and the hollow shaft 61 are made capable to move relatively each other in the axial direction of the hollow shaft 61B for a distance corresponding to the axial length of the engagement groove 61B, and the thrust force from the input shaft 103 is not transmitted to the hollow shaft 61. However, with regard to the circumferential direction, the hollow shaft 61 and the input shaft 103 are incapable of relative rotation, and therefore, it is possible to transmit the torque from the input shaft 103 to the hollow shaft 61.

In a state that the input shaft 103 and the hollow shaft 61 are connected, the elastic repulsive force operates to the spring pin 62 so as to enlarge outwardly in the radial direction, and the spring pin 62 presses one of the engagement grooves 61B of the hollow shaft 61, the pin hole of the input shaft 103 (not shown in Fig. 8), and the other engagement groove 61B of the hollow shaft 61. Thus, the spring pin 62 is prevented to be removed from the input shaft 103 or the hollow shaft 61.

The other constructions and operative effects of the fourth embodiment shown in Fig. 8 are similar to those in each of the embodiments shown in Figs. 1 to 6 and 7.

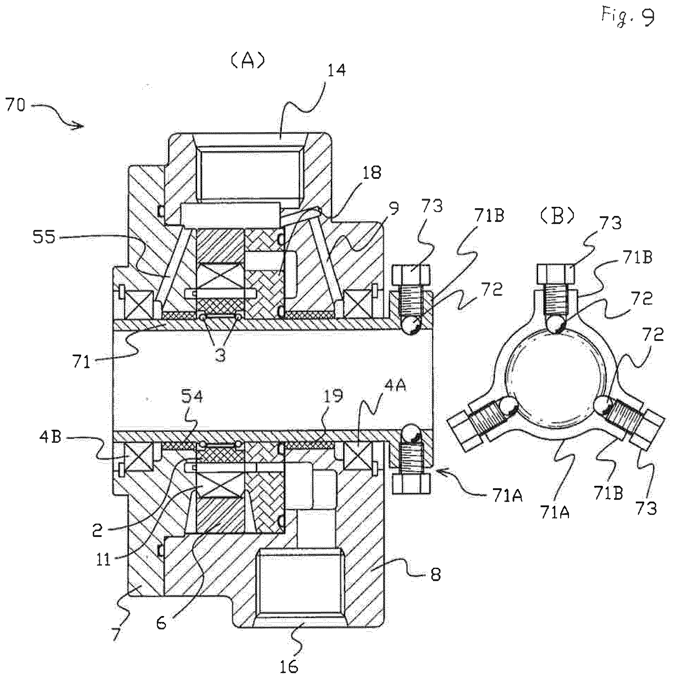

The fifth embodiment will be described with reference to Fig. 9.

In the fifth embodiment shown in Fig. 9, by means of a plurality of pressing bolts 73, the input shaft 103 (solid shaft: Fig. 1) of the transmission device 101 (Fig. 1), not shown, and the hollow shaft 71 of the vane pump 70 are connected in the manner that the rotation force (torque) is transmitted but the thrust force is not transmitted. As will be described hereinafter, the "mechanism which transmits the torque but does not transmit the thrust" in the fifth embodiment shown in Fig. 9 has a plurality of accommodating portions 71B provided at equal interval in the circumferential direction of the hollow shaft 71, a plurality of engagement balls 72 (spherical members) accommodated in the accommodating portion 71B and a plurality of pressing bolts 73 (member for pressing in the radial direction).

In Fig. 9, the axial dimension of the hollow shaft 71 is designed so as to be larger than the width of the pump case (the body portion 8 and the cover portion 7 of the vane pump 70), and the distal end (right end in Fig. 9) of the hollow shaft 71 is protruded (protruding portion 71A) from the pump case end portion (right end in Fig. 9, the body portion 8 side).

In the protruding portion 71A of the hollow shaft 71, the plurality of accommodating portions 71B for accommodating the engagement balls 72 and the pressing bolts 73 are disposed at the same interval in the circumferential direction. As shown in Fig. 9(B), in the fifth embodiment shown in Fig. 9, the accommodating portions 71B are formed at the same intervals in the circumferential direction at three spots in total so that a center angle is a 120° interval.

Each of the accommodating portions 71B is formed integrally with the hollow shaft 71, is formed cylindrically, and protrudes outwardly from the outer peripheral surface of the hollow shaft 71.

The hollow portion of the accommodating portion 71B is formed so as to extend in the radial direction of the hollow shaft 71, and a female screw being screwed with the pressing bolt 73 is formed in the inner peripheral surface of the hollow portion.

Though an inner end portion in the radial direction of the accommodating portion 71B is opened to an inner peripheral surface side of the hollow shaft 71, a sectional area of an opening in the inner end portion in the radial direction of the accommodating portion 71B is designed so as to be smaller 1 than a sectional area of the engagement ball 72. Thus, in a case that the engagement ball 72 is disposed in the hollow portion of the accommodating portion 71B, a distal end side (an end portion in the radial direction of the hollow shaft 71) of the engagement ball 72 merely protrudes to the inner peripheral surface side of the hollow shaft 71 from the opening but the entire engagement ball 72 does not moved to the inner peripheral surface side of the hollow shaft 71.

By tightening the pressing bolts 73 in each of the accommodating portions 71B uniformly, the engagement ball 72 is pressed inwardly in the radial direction by the pressing bolt 73, and a distal end of the engagement ball 72 protrudes uniformly to the outer peripheral surface of the input shaft 103 (see Fig. 1) from the inner peripheral surface of the hollow shaft 71, presses the input shaft 103 and connects (couples) the input shaft 103 and the hollow shaft 71. As a result, the input shaft 103 and the hollow shaft 71 are not relatively moved (without rattling) in the circumferential direction and in the radial direction of the hollow shaft 71 and coupled in a manner that the shaft cores of the input shaft 103 and the hollow shaft 71 are matched or aligned.

Here, the number of accommodating portions (engagement balls, pressing bolts) is not limited to three. The accommodating portions may be provided in two if they are disposed at an equal interval in the circumferential direction of the hollow shaft 71, or may be provided in four or more. However, as shown in Fig. 9, if three accommodating portions 71B are provided, it is excellent as regard a balance of power and efficiency of tightening.

The number of accommodating portions is not particularly limited if the shaft cores of the input shaft 103 and the hollow shaft 71 are not offset.

The accommodating portion 71B may be formed integrally with the hollow shaft 71 as shown in Fig. 9, but may be formed separately from the hollow shaft 71.

The other constructions and operative effects of the fifth embodiment in Fig. 9 are similar to those in each of the embodiments shown in Figs. 1 to 6, Fig. 7, and Fig. 8.

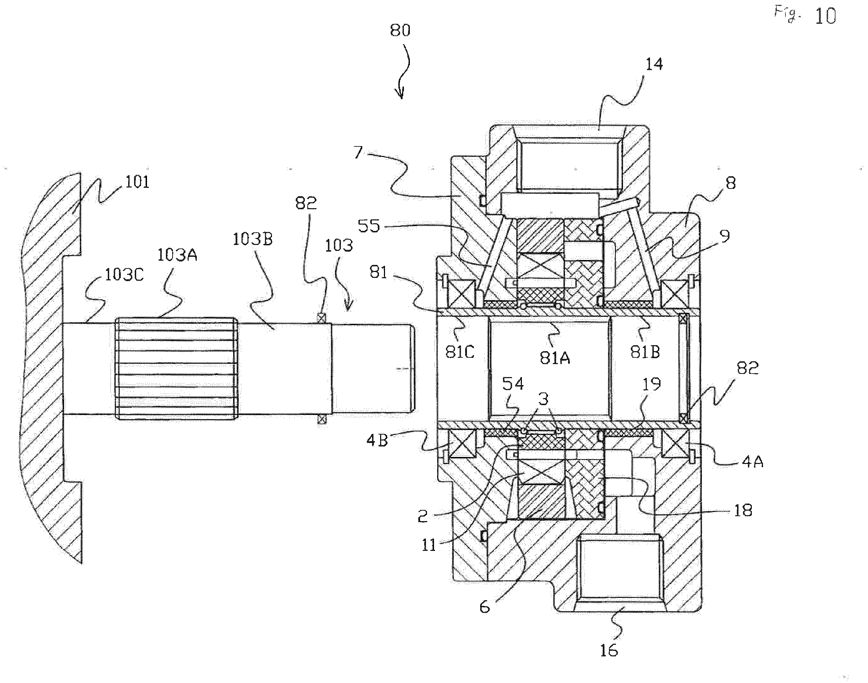

Subsequently, the sixth embodiment will be described with reference to Fig. 10.

In the sixth embodiment shown in Fig. 10, the mechanism in which the rotation force (torque) is transmitted but the thrust force is not transmitted is constructed by a spline formed on the outer peripheral surface of the input shaft 103 (rotation driving shaft) and the inner peripheral surface of the hollow shaft 81.

In Fig. 10, the spline (a spline portion 81A of the hollow shaft 81) is formed on the inner peripheral surface in a region in the vicinity immediately below the vane 11 (rotor 2) located in the vicinity of the center in the axial direction of the hollow shaft 81 merely, and a portion (spline portion) of the hollow shaft 81 in which the spline is formed is indicated by reference character 81A. Moreover, in the input shaft 103, the spline is formed only on the outer peripheral surface of the input shaft 103 corresponding to the region (the spline portion 81A of the hollow shaft 81) in the vicinity immediately below the vane of the hollow shaft 81, and the portion (input shaft spline portion) in which the spline of the input shaft 103 is formed is indicated by reference character 103A.

On the other hand, in the hollow shaft 81, there are large diameter portions 81B and 81C, in which the spline is not formed, on a distal end side (the vane pump body portion 8 side: right end side in Fig. 10) and on a rear end side (the cover portion 7 side, the left end side in Fig. 10), respectively. And in the input shaft 103, on regions in the axial direction corresponding to the large diameter portions 81B and 81C in which the spline of the hollow shaft 81 is not formed, there are regions 103B and 103C (non-spline portions) in which the spline is not formed, respectively.

The large diameter portions 81B and 81C of the hollow shaft 81 and the non-spline portions 103B and 103C of the input shaft 103 construct a lubricant-oil filling space (large diameter portion) in which the lubricant oil (grease oil, for example) is filled.

In Fig. 10, the square ring 82 (made of resin or oil-resistant rubber, for example), which is a ring having a square sectional shape, is provided as a sealing member for the lubricant oil on the large diameter portion 81B on the distal end side (the side separated from the cover portion 7: right end side in Fig. 10). The inner diameter of the square ring 82 is substantially equal to the outer diameter of the input shaft 103.

After the grease oil is filled in the large diameter portions 81B, 81C on the distal end side and the rear end side (the right end side and the left end side in Fig. 10) of the hollow shaft 81, by attaching the vane pump 80 to the transmission device 101, the space of the large diameter portion 81C on the rear end side (the left end side in Fig. 10) is closed by a housing of the transmission device 101, and the grease oil can be sealed. On the other hand, the space of the large diameter portion 81B on the distal end side (right end side in Fig. 10) is sealed by providing the square ring 82 on the outer peripheral surface of the non-spline portion 103B on which no spline is engraved in the input shaft 103, and the grease-filled state can be maintained.

In a case that the vane pump is to be driven by the internal combustion engine, the torque fluctuation specific to the internal combustion engine operates to the splines through the input shaft, the teeth of the male and female splines collide against each other (teeth are hit by each other), and there, surfaces of the teeth of the splines are damaged.

On the other hand, in the sixth embodiment shown in Fig. 10, by interposing the grease oil which is the lubricant oil, collision of teeth of the spline against each other, which collision would damage the tooth surface, can be reduced by the grease oil operating as a cushion.

The other constructions and operative effects of the sixth embodiment shown in Fig. 10 are similar to those in each of the embodiments shown in Figs. 1 to 6, Fig. 7, Fig. 8, and Fig. 9.

Here, a variation of the sixth embodiment will be described with reference to Fig. 11.

In the sixth embodiment shown in Fig. 10, since the spline is not engraved in the large diameter portion 81A on the distal end side (right end side in Fig. 10) of the hollow shaft 81, the square ring 82 can be installed as it is. However, as shown in Fig. 11(A), in a case that the spline is formed on the whole region in the axial direction of the hollow shaft 91 of the vane pump 90, in order to provide the square ring 82 for sealing as shown in Fig. 10, it is necessary to cut off the spline (on the inner peripheral surface of the hollow shaft) on (the distal end side (right end side in Fig. 11) of the hollow shaft 91) the region in which the square ring 82 should be installed by machining so as to form a cylindrical surface, and to install the square ring 82 at the spot after the machining.

On the other hand, in the variation of the sixth embodiment, as shown in Fig. 11(B), the spline seal 92 (made of resin) is used as a sealing member for the lubricant oil, and then, on the outer periphery surface of the spline seal 92, there are plurality of projection-and-recess which corresponds to the female spline on the inner peripheral surface of the hollow shaft 91.

When the input shaft 103 (rotation driving shaft, Fig. 1), not shown, and the hollow shaft 91 are connected, the spline seal 92 is assembled from the distal end side (right end side in Fig. 11) of the hollow shaft 91, the outer peripheral surface of the input shaft 103 is inserted into the space on the inner side in the radial direction of the spline seal 92, and then, the male spline of the input shaft 103 and the female spline on the inner peripheral surface of the hollow shaft 91 are engaged. Since the spline seal 92 has the projection-and-recess surface formed on the outer periphery corresponding to the female spline of the hollow shaft 91, the male spline of the input shaft 103 and the female spline of the hollow shaft 91 can be sealed. Therefore, it is not necessary to cut off the spline (on the inner peripheral surface of the hollow shaft 91) by machining in order to form the cylindrical surface, at the spot where the spline seal 92 should be installed. And while the female spline is formed over the entire length of the hollow shaft 91, the lubricant oil can be sealed therein without increasing a machining cost.

The other constructions and operative effects of the variation shown in Fig. 11 are similar to those in the sixth embodiment shown in Fig. 10.

The embodiments shown in drawings are merely exemplifications and it should be noted that the descriptions of the embodiments are not intended to limit the technical scope of the present invention.

In the embodiments shown in drawings, the input shaft 103 of the transmission device 101 is inserted into the hollow portion of the hollow shafts 1, 21, 51, 61, 71, 81, 91, however, the output shaft 105 of the motor 102 (driving source) such as a motor can be inserted into the hollow portion of the hollow shafts 1, 21, 51, 61, 71, 81, 91, for example.

### [Reference Characters List]

- 1, 21, 51, 61, 71, 81, 91: hollow shaft
- 1A: shaft-side recess portion
- 2, 22: rotor
- 2A: rotor-side stepped portion
- 3, 23: wire ring
- 4 (4A, 4B), 24 (24A, 24B): mechanical seal
- 5, 25: relief circuit for protection
- 6, 26: cam ring
- 7, 27: cover portion
- 8, 28: body portion
- 9, 29, 55: relief circuit for mechanical seal
- 10, 20, 50, 60, 70, 80, 90: vane pump
- 11, 31: vane
- 11G: vane groove
- 12: pressure-oil storage portion for vane
- 13, 33: intake circuit
- 14, 34: intake port
- 15, 35 (35-1, 35-2): ejection circuit
- 16, 36 (36-1, 36-2): ejection port
- 17, 37: circuit for pressure loading
- 18, 38: pressure plate
- 19, 39, 54: bearing bush
- 40: intermediate plate
- 52: key
- 53: keyway
- 61B: engagement groove
- 62: spring pin
- 71B: accommodating portion
- 72: engagement ball
- 73: pressing bolt
- 82: square ring (sealing member for lubricant oil)
- 92: spline seal (sealing member for lubricant oil)
- 101: transmission device
- 102: driving source
- 103: input shaft
- 105: output shaft
- B: joining bolt
- H: bolt hole
- α: pump chamber

## Claims

1. A vane pump comprising a hollow shaft, wherein
the hollow shaft is constructed such that a rotation driving shaft of a driving source can be inserted into a hollow portion; and
the hollow shaft and the rotation driving shaft are connected by a mechanism for transmitting a torque but transmitting no thrust.

2. The vane pump according to claim 1, wherein
a rotor is mounted on said hollow shaft.

3. The vane pump according to claim 2, wherein
said hollow shaft and the rotor are mounted such that relative rotation is not possible and movement in an axial direction is limited by a wire ring; and
the wire ring is disposed in a mode across a shaft-side recess portion and a rotor-side stepped portion in a state where the shaft-side recess portion formed on said hollow shaft and the rotor-side stepped portion formed on the rotor are aligned.

4. The vane pump according to any one of claims 1 to 3, wherein
a mechanical seal is provided on both end portions in the axial direction of said hollow shaft; and
a circuit for allowing the mechanical seals on the both end portions to communicate is formed.

5. The vane pump according to any one of claims 1 to 4, wherein
said mechanism for transmitting a torque but transmitting no thrust is splines formed on an inner peripheral surface of the hollow shaft and an outer peripheral surface of the rotation driving shaft.

6. The vane pump according to any one of claims 1 to 4, wherein
said mechanism for transmitting a torque but transmitting no thrust is a key and a keyway.

7. The vane pump according to any one of claims 1 to 4, wherein
said mechanism for transmitting a torque but transmitting no thrust preferably has an engagement groove penetrating the hollow shaft, a through hole of the rotation driving shaft, and a spring pin capable of insertion into the engagement groove and the through hole.

8. The vane pump according to any one of claims 1 to 5, wherein
said mechanism for transmitting a torque but transmitting no thrust is constructed by splines formed on the outer peripheral surface of the rotation driving shaft and the inner peripheral surface of the hollow shaft;
the spline is formed only in a region in the vicinity of the vane in the axial directions of the rotation driving shaft and the hollow shaft;
a region where the splines are not provided in the rotation driving shaft and the hollow shaft constructs a lubricant-oil filling space in which a lubricant oil is filled; and
a sealing member for the lubricant oil is provided in a region on a side separated from a cover portion.

9. The vane pump according to any one of claims 1 to 5, wherein
said mechanism for transmitting a torque but transmitting no thrust is constructed by splines formed on the whole region in the axial direction of the outer peripheral surface of the rotation driving shaft and the inner peripheral surface of the hollow shaft;
a sealing member for the lubricant oil is disposed in a region on a side separated from the cover portion;
the sealing member has projections and recesses formed on an outer periphery thereof; and
the projections and recesses are formed correspondingly to the spline formed on the inner peripheral surface of the hollow shaft.

10. The vane pump according to any one of claims 1 to 3 and 5 to 9, wherein
the hollow shaft is supported by a supporting member disposed on a side separated from the cover portion and a supporting member disposed in the vicinity of the cover portion.

11. The vane pump according to claim 10, wherein
a circuit allowing a mechanical seal on the cover portion side and an intake portion to communicate is formed.
